# EUROPÄISCHE PATENTSCHRIFT

(11) **EP 2 605 248 B1**
(45) Veröffentlichungstag und Bekanntmachung des Hinweises auf die Patenterteilung: **30.09.2015**
(21) Anmeldenummer: 12008254.0
(22) Anmeldetag: 11.12.2012
(51) Int. Cl.: G21C 19/32, G21F 9/00, G21F 9/16, G21F 9/30, B01F 3/00, B01F 7/24, B28C 5/00, B01F 7/00

(54) **Rührvorrichtung zum Verrühren von radioaktiv vorbelasteten abrasiven Stoffen**
Stirring device for mixing abrasive materials with radioactive charge
Dispositif de malaxage pour mélanger des matériaux abrasifs chargés radioactivement

(30) Priorität: 16.12.2011 DE 102011121203; 16.12.2011 DE 202011109132 U
(43) Veröffentlichungstag der Anmeldung: 19.06.2013
(73) Patentinhaber: Westinghouse Electric Germany GmbH, 68167 Mannheim (DE)
(72) Erfinder: Fehrmann, Henning, 68519 Viernheim (DE)
(74) Vertreter: Fritsch, Klaus

(56) Entgegenhaltungen:
- EP-A2- 0 170 995
- DE-A1-102005 004 829
- DE-A1-102006 061 940
- DE-B3-102004 034 371
- JP-A- S5 281 759
- JP-A- 2003 062 548

## Beschreibung

Die Erfindung betrifft eine Rührvorrichtung zum Vermischen von abrasiven Materialien.

Es ist allgemein bekannt, dass in nuklearen Anlagen, beispielsweise in Kernkraftwerken, betriebsmäßig neben den höchst radioaktiven abgebrannten Brennelementen auch schwächer radioaktiver Abfall anfällt, welcher ebenfalls zu entsorgen ist. Dies können beispielsweise während Wartungs- oder Umbauarbeiten anfallender Abfall oder sonstige Materialien sein, die zuvor in ihrer Betriebszeit einer starken radioaktiven Strahlung ausgesetzt waren bzw. selbst radioaktive Materialien enthalten. Beispiele hiefür sind Verdampfungskonzentrat, ein korrosionsbedingter im Rahmen einer Wartung zu entsorgender Bodensatz aus Wasserbecken oder sonstige Schlämme. Je nach Reaktorgröße fallen jährlich einige 10 m³ derartigen Abfalls an. Um derartige radioaktive Abfälle sicher lagerbar zu machen werden diese üblicherweise in einem Zement-Wasser-Gemisch verrührt. Danach wird das radioaktive Zementgemisch beispielsweise in jeweilige Formen gegossen, wo es dann aushärtet. Die so entstandenen radioaktiven Zement- beziehungsweise Betonblöcke sind dann einer Lagerung zuzuführen.

Aus diesem Grund verfügen Kernkraftwerke zumeist über sogenannte Zementierungsanlagen, in welchen der zuvor genannte Prozess, insbesondere auch der Mischvorgang des radioaktiven Abfalls mit Zement und Wasser, erfolgt. Hierzu wird das Gemisch in einen Rührbehälter eingeführt und dort mittels Rührvorrichtungen vermischt. Rührvorrichtungen weisen typischerweise spiralähnliche Rührwerkzeuge auf, welche in das zu verrührende Gemisch hineinragen und dieses mittels einer Drehbewegung verrühren. Als Verschleißschutz wird bei industriellen Zementmischern beziehungsweise deren Rührwerkzeugen bisweilen eine Schutzschicht aus PU (Polyurethan) eingesetzt.

Nachteilig bei handelsüblichen Rührwerkzeugen für das Vermischen von abrasiven Materialien ist, dass diese auch trotz PU Schutzschicht einem hohen Verschleiß unterliegen und bei deren Reinigung regelmäßig eine hohe Menge an Abfallmaterial anfällt. Insbesondere bei einem Einsatz in radioaktiven Bereichen ist aber jegliches Abfallmaterial als radioaktiver Abfall zu entsorgen. Ebenso sind verschlissene Rührwerkzeuge als radioaktiver Abfall zu entsorgen.

*So ist in der* JP S52 81759 A *und in der* EP 0170 995 A2 *jeweils eine Rührvorrichtung für radioaktiv belastete Stoffe offenbart, welches mit einer Schutzschicht überzogen ist, gemäß dem Oberbegriff der Ansprüche 1 und 2. Die* DE 10 2004 034371 B3 *offenbart ein Rührwerkzeug für Beton. Die* JP 2003 062548 A*,* DE 10 2005 004829 A1 *und* DE 10 2006 061940 *offenbaren Antihaftbeschichtungsvarianten für Küchenutensilien und andere Haushaltsgeräte.*

Ausgehend von diesem Stand der Technik ist es Aufgabe der Erfindung, eine Rührvorrichtung bereitzustellen, welche sich durch einen besonders geringen Verschleiß beim Mischen von abrasiven und radioaktiv belasteten Materialien auszeichnet und welches besonders einfach und unter möglichst geringem Anfall von Abfallmaterial zu reinigen ist. Es ist auch Aufgabe der Erfindung, eine entsprechende Rührvorrichtung und eine entsprechende Verwendung anzugeben.

Diese Aufgabe wird gelöst durch eine Rührvorrichtung mit den Merkmalen der Ansprüche 1 und 2.

Die Grundidee der Erfindung besteht einerseits darin, ein Rührwerkzeug für abrasive Materialien mit einer leistungsfähigen Antihaft-Schutzschicht zu überziehen, um so die Menge an anhaftendem und im Reinigungsfall zu entsorgenden Abfall zu reduzieren. Trotzdem anhaftendes Material, beispielsweise abgebundener oder auch noch feuchter Zement, wird bei einem Reinigungszyklus entfernt und ist anschließend aufgrund seiner Kontamination als kontaminierter Abfall zu entsorgen. Aufgrund der verringerten ringerten Anhaftung von Material am Rührwerkzeug ist somit der Anfall an zu entsorgendem Abfall in vorteilhafter Weise reduziert. Die Antihaft-Schutzschicht erleichtert zudem das gegebenenfalls auch selbständige Ablösen von bereits verhärteten Anlagerungen an dem Rührwerkzeug.

Durch eine besonders hohe mechanische Festigkeit der Schutzschicht wird die Einsatzdauer des Rührwerkzeugs darüber hinaus vorteilhaft erhöht, weil der mechanische Verschleiß dadurch deutlich reduziert wird. Durch die Auswahl eines zudem besonders radiologisch beständigen Materials wird die Lebensdauer eines solchen Rührwerkzeuges, welches nach deren Ablauf ebenfalls als radioaktiver Abfall zu entsorgen ist, weiterhin vorteilhaft verlängert. Die daraus resultierenden deutlich verringerten Wartungszyklen reduzieren in besonders vorteilhafter Weise die Notwendigkeit manueller Eingriffe von Wartungspersonal, welches im Wartungsfall trotz höchster Schutzvorkehrungen immer noch einer Reststrahlenbelastung ausgesetzt ist. Zudem ist bei verringerter Anzahl an Reinigungszyklen im Falle einer Reinigung mit Wasser beispielsweise der diesbezügliche Wasserverbrauch reduziert, wobei dieses nach dem Reinigungseinsatz ebenfalls kontaminiert ist.

PEEK bezeichnet die chemische Gruppe der Polyetheretherketone, welche gegen eine Vielzahl von organischen und anorganischen Verbindungen beständig ist. PEEK findet typischerweise Anwendung in der Automobilindustrie, als Isolationsmaterial in der Hochspannungstechnik, als Wafercarrier in der Halbleitertechnik oder auch als flexibler Schaltungsträger in der Elektronik. PEEK findet auch Anwendung als Kernmaterial für Instrumenten- oder Tennissaiten. Eine Anwendung für eine Beschichtung von Werkzeugen ist jedoch bis jetzt nicht bekannt. PEEK weist weitere Untergruppen auf, beispielsweise PEK, PEKK oder PEEKEK, welche sich unter anderem als besonders geeignet für den erfindungsgemäßen Einsatz erwiesen haben.

Es hat sich gezeigt, dass PEEK neben seiner hervorragenden chemischen und mechanischen Beständigkeit und einem sehr geringen Reibungskoeffizienten einer entsprechenden Oberflächenbeschichtung auch eine hohe radiologische Beständigkeit aufweist. PEEK eignet sich somit in hervorragender Weise für die Beschichtung eines Rührwerkzeuges für das Vermischen auch radioaktiv kontaminierter abrasiver Materialien.

Das aus anderen Einsatzgebieten bekannten Beschichtungsmaterial PTFE (Polytetrafluorethylen), welches beispielsweise auch zur Teflon-Beschichtung von Pfannen verwendet wird, ist für den Einsatz im nuklearen Bereich nicht geeignet, da die ionisierende Strahlung des radioaktiven Materials zu einer Zersetzung des PTFE Kunststoffes führen würde, und damit ein derart beschichtetes Rührwerkzeug in einem kurzen Zeitraum unbrauchbar würde. Entsprechende Hinweise finden für sich beispielsweise in Domininghaus, H; Elsner, P.; Eyerer, P.; Hirth, T.: Kunststoffe - Eigenschaften und Anwendungen (2008); Springer Verlag Berlin, Heidelberg*.*

Die beschriebene Erfindung ist selbstverständlich nicht auf Rührwerkzeuge beschränkt, vielmehr ist die Erfindung auf alle Werkzeuge auszuweiten, welche in direktem Kontakt mit abrasiven und. gegebenenfalls radioaktiv belastetem Material sind. Die Beschichtung des Rührwerkzeuges ist derart auszugestalten, dass die Bereiche, welche während des Mischvorgangs mit zu mischendem Material in Berührung kommen, komplett damit überzogen sind. So kann beispielsweise im oberen Bereich eines Drehrührers, wo eine Verbindungsstelle zu einer Antriebsvorrichtung vorgesehen ist, bedarfsweise auf eine Beschichtung verzichtet werden.

Alternativ zu einer Beschichtung mit PEEK hat sich auch eine Beschichtung des Rührwerkzeuges mit Polyaryl, Polyphenylensulfone bzw. -sulfiden als vorteilhaft erwiesen. Polyaryl, Polyphenylensulfone bzw. -sulfide bezeichnen die chemische Gruppe der thermoplastischen Polykondensate, die in der Hauptkette ihres Bausteins Schwefelatome in der Form von Sulfid (S) oder Sulfon (SO₂) enthalten. Diese Gruppe ist dadurch gekennzeichnet, dass das Schwefelatom immer an in der Hauptkette befindliche Aromate gebunden ist, wie z.B. bei der Diphenylsulfon- oder -sulfidgruppe. Diese Thermoplaste sind gegen eine Vielzahl von organischen und anorganischen Verbindungen beständig und weisen eine hohe Beständigkeit gegenüber ionisierender Strahlung auf. Die Gruppe der Polyarylsulfone bzw. -sulfide hat eine breite Anwendung z.B. in der Automobilindustrie, in der Elektrotechnik, in der Medizintechnik oder im allgemeinen Apparatebau. Die Kunststoffe werden dabei beispielsweise zu Steckern, Gehäusekörpern, Halterungen oder Lagerkäfigen verarbeitet. Gängige und erfindungsgemäß geeignete Kunststoffe aus der Gruppe der Polyaryl, Polyphenylensulfone bzw- sulfide sind z.B. Polysulfon (PSU), Polyethersulfon (PESU) oder Polyphenylensulfid (PPS).

Es hat sich gezeigt, dass die Gruppe der Polyaryl, Polyphenylensulfone bzw- sulfide neben ihrer hervorragenden chemischen und mechanischen Beständigkeit auch eine hohe radiologische Beständigkeit aufweist. Darüber hinaus kann das Reibungs- und Verschleißverhalten der Gruppe der Polyaryl, Polyphenylensulfone bzw- sulfide sehr gut modifiziert werden. Für die Modifizierung des Reibungs- und Verschleißverhalten werden typischerweise Materialien wie Glasfaser oder Graphit verwendet.

Gemäß einer besonders bevorzugten Ausführungsform weist die Schutzschicht aus PEEK oder einem Polymer aus der Gruppe der Polyaryl, Polyphenylensulfone oder -sulfide eine Schichtdicke überwiegend im Bereich von 100µm bis 250µm auf. Ein derartiger Schichtdickenbereich ist gegenüber bekannten Schichtdicken erhöht und führt - einen betriebsmäßigen Abrieb vorausgesetzt - bereits zu einer deutlich erhöhten Lebensdauer und den erfindungsgemäßen geringen Antihafteingenschaften des erfindungsgemäßen Rührwerkzeugs. Der angegebene Schichtdickenbereich lässt sich noch mit einem einzigen Beschichtungsvorgang aufbringen, so dass eine derartige Schutzschicht besonders homogen herstellbar ist.

Gemäß der Erfindung weist die PEEK Schutzschicht eine Schichtdicke überwiegend im Bereich von 500µm bis 750µm auf. Eine derartige Schichtdicke erweist sich gegenüber bekannten Schichtdicken von anderen Schutzschichten als verhältnismäßig dick, dies ist jedoch vor dem Hintergrund einer zu erzielenden möglichst langen Lebensdauer des Rührwerkzeugs zu sehen. So wird ein marginaler Abrieb der Schutzschicht über einen langen Betriebszeitraum, beispielsweise bis zu mehreren Jahren, durch eine entsprechende Schutzschichtdicke kompensiert, ohne dass ein Verlust der Schutzwirkung einsetzen würde. Gegebenenfalls sind je nach Anwendungsfall aber auch Schichtdicken bis 1000µm oder auch darüber sinnvoll. Bei derartigen Schichtdicken ist jedoch zu beachten, dass eine entsprechende Schutzschicht zumeist in mehreren Aufträgen appliziert werden muss, wobei daraus auch eine gewisse Inhomogenität resultiert, welche dem Vorteil einer erhöhten Schichtdicke teilweise entgegenwirkt.

Gemäß der Erfindung weist die Schutzschicht aus einem Polymer aus der Gruppe der Polyaryl, Polyphenylensulfone oder -sulfide eine Schichtdicke überwiegend im Bereich von 250µm bis 750µm auf. Es hat sich gezeigt, dass auch mehrere Schichten dieses Materials mit einer verhältnismäßig hohen Homogenität aufeinander appliziert werden können, so dass dem Effekt der Inhomogenität einer erhöhten Schichtdicke durch eine mehrfache Beschichtung nicht nennnenswert entgegen gewirkt wird.

Gemäß einer weiteren Erfindungsvariante wurde die Schutzschicht zuvor mittels elektrostatischer Pulverbeschichtung und nachträglichem Einbrennen erzeugt. Dies ist ein Verfahren, durch welches eine sehr gleichmäßige Beschichtung des Rührwerkzeuges bei gleichzeitig sehr guten mechanischen Eigenschaften der Schutzschicht erreicht wird, insbesondere auch bezüglich geringem Reibungskoeffizienten und hoher Härte der Oberfläche. Die Einbrenntemperatur liegt in einem Bereich von etwa 380°C bis 420°C. Es sind aber auch andere Beschichtungsverfahren wie Dispersionsbeschichtung oder Flammenspritzen anwendbar.

Entsprechend einer weiteren Erfindungsvariante besteht das Rührwerkzeug in seinem inneren Kern aus einem besonders widerstandsfähigen Material, beispielsweise Edelstahl. Gemäß einer weiteren Variante der Erfindung sind zwei drehbare Einzelrührwerkzeuge benachbart angeordnet. Auf diese Weise ist ein besonders effektiver Mischvorgang gewährleistet.

Die zuvor genannten Vorteile eines erfindungsgemäßen Rührwerkzeuges übertragen sich auch auf eine erfindungsgemäße Rührvorrichtung. Neben einer Antriebsvorrichtung für das wenigstens eine Rührwerkzeug sind beispielsweise auch ein Mischbehälter, Zuführvorrichtungen für Zement, Wasser und radioaktiven Abfall sowie eine Entleerungsvorrichtung für das gemischte Material mögliche Komponenten einer Rührvorrichtung. Gemäß einer weiteren erfindungsgemäßen Ausgestaltung der Rührvorrichtung umfasst diese eine nukleare Sicherheitsummantelung, innerhalb welcher die eigentliche Rührvorrichtung angeordnet ist. Eine derartige Sicherheitsummantelung dient der Begrenzung des Raumes innerhalb dem radioaktives Material verarbeitet wird. Der Raum ist typischerweise unter Einhaltung strengster Sicherheitsmaßnahmen nur über eine Schleuse erreichbar, wobei im betrieblichen Normalfall jegliche Vorgänge ferngesteuert und ohne lokalen manuellen Eingriff erfolgen. Die Sicherheit der Anlage und des Personals wird hierdurch verbessert.

Die erfindungsgemäße Aufgabe wird auch gelöst durch die Verwendung eines erfindungsgemäßen Rührwerkzeuges oder einer erfindungsgemäßen Rührvorrichtung zum Verrühren von radioaktiv vorbelasteten abrasiven Stoffen beispielsweise mit einem Zement-Wasser Gemisch, Beton oder vergleichbaren Materialien. Radioaktiv vorbelastete Stoffe beziehungsweise Abfälle können beispielsweise eine kristalline, schlammähnliche oder auch einkondensierte Form aufweisen. Aber auch lonenaustauscherharze, welche in einer nuklearen Anlage zumeist zur Anwendung kommen, sind nach Ablauf ihrer Lebensdauer als radioaktiver Abfall zu entsorgen. lonenaustauscherharze liegen als kunststoffbasierte Feststoffe beispielsweise in kugel- beziehungsweise pulverförmiger Form vor und lassen sich damit auch gut mit einem Zement-Wassergemisch verrühren. Die entsprechenden Vorteile, welche sich gerade bei der Vermischung von kontaminiertem Material ergeben, wurden bereits zuvor erläutert.

Insbesondere ist in einer bevorzugten Verwendungsvariante die Verwendung einer erfindungsgemäßen Rührvorrichtung in nuklearen Anlagen, insbesondere in Kernkraftwerken, vorgesehen. Gerade hier fällt betriebsmäßig zu entsorgender radioaktiver Abfall an, welcher in vorteilhafter Weise dann unter Verwendung einer jeweiligen Rührvorrichtung oder Rührwerkzeugs mit einem Zement-Wasser Gemisch zu verrühren ist. Im Rahmen der jeweiligen erfindungsgemäß selten stattfindenden Reinigungszyklen fällt besonders wenig zu entsorgender Abfall an, wobei sich das Rührwerkzeug als besonders langlebig erweist.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

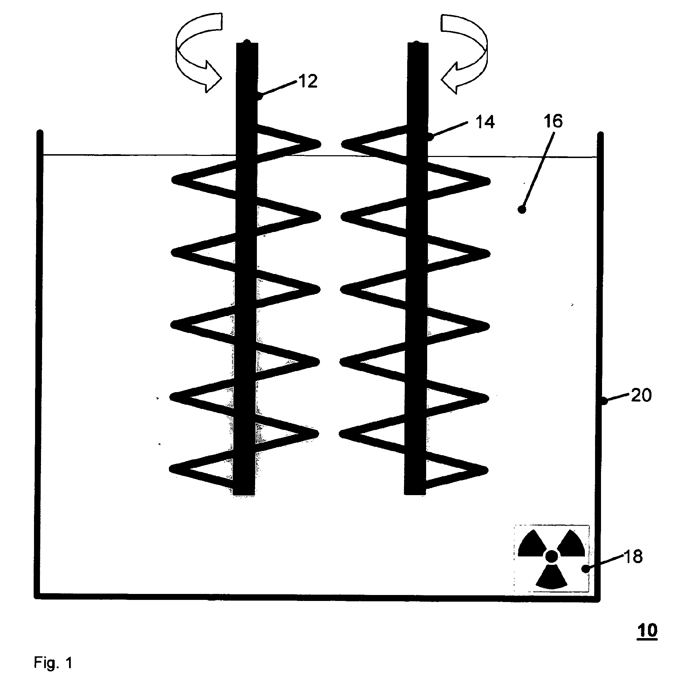

Es zeigen
- Fig. 1: exemplarische Rührwerkzeuge in einem Rührbehälter.

Fig. 1 zeigt in einer Darstellung 10 zwei gegenläufig angetriebene Rührwerkzeuge 12, 14 in einem Rührbehälter 20. Dieser ist mit einer zu verrührenden Zement- / Wassermischung 16 gefüllt, welche radioaktiv belastet ist, wie mit dem Zeichen mit der Bezugsziffer 18 angedeutet ist. Die radioaktive Belastung erfolgt durch das Beimengen von radioaktivem Abfall, welcher dann in dem später ausgehärteten Zement sicher gelagert werden soll. Nach Abschluss eines jeweiligen Misch- beziehungsweise Rührvorgangs sind die dabei mit der Zement- / Wassermischung 16 in Kontakt gekommenen Rührwerkzeuge 12, 14 vorzugsweise einem jeweiligen Reinigungsvorgang zu unterziehen. Idealerweise ist jedoch ein solcher Reinigungszyklus möglichst hinauszuzögern, also nicht nach jedem Rührvorgang durchzuführen.

Durch die erfindungsgemäße Beschichtung der Rührwerkzeuge mit PEEK wird die Anhaftung von Zement oder vergleichbarer zu mischender Stoffen an den Rührwerkzeugen 12, 14 in vorteilhafter Weise reduziert, so dass das Wartungsintervall verlängert ist. Die Menge der bei einem jeweiligen Reinigungszyklus anfallenden den Rührwerkzeugen anhaftenden Zementrückstände, welche als radioaktiver Abfall zu entsorgen sind, ist dadurch zudem in vorteilhafter Weise reduziert. Insbesondere aufgrund der hohen radiologischen Beständigkeit einer PEEK Beschichtung erweist sich ein derart beschichtetes Rührwerkzeug 12, 14 für den langfristigen Einsatz in radioaktiv belasteten Bereichen beziehungsweise für das Verrühren von radioaktiv 18 belasteten Materialien 16 als geeignet. Zudem weist PEEK eine hervorragende mechanische Beständigkeit auf, so dass eine PEEK Schutzschicht auch einer hohen abrasiven Belastung durch die Werkstoffpartikel der Zementanmischung 16 beim Rührvorgang widersteht. Darüber hinaus erweist sich eine PEEK Schutzschicht als chemisch hoch beständig, so dass auch ein Kontakt mit einer säurehaltigen Substanz beispielsweise keinen negativen, die Lebensdauer der Schutzschicht reduzierenden Einfluss zur Folge hat.

### Bezugszeichenliste

- 10: exemplarische Rührwerkzeuge in einem Rührbehälter
- 12: erstes Rührwerkzeug
- 14: zweites Rührwerkzeug
- 16: kontaminierte Zement- / Wassermischung
- 18: radioaktive Strahlung
- 20: Rührbehälter

## Patentansprüche

1. Rührvorrichtung umfassend wenigstens ein Rührwerkzeug (12, 14) zum Verrühren von radioaktiv vorbelasteten abrasiven Stoffen, insbesondere Zement (16), eine Antriebsvorrichtung zum Drehen des wenigstens einen Rührwerkzeuges (12, 14) *sowie Zuführvorrichtungen für Zement, Wasser und radioaktiven Abfall,*
**dadurch gekennzeichnet,**
***dass*** *zumindest ein Teil der Oberfläche des Rührwerkzeugs (12, 14) mit einer Schutzschicht aus PEEK überzogen ist und dass die Schutzschicht eine Schichtdicken überwiegend im Bereich von 500µm bis 750µm aufiweist.*

2. Rührvorrichtung umfassend wenigstens ein Rührwerkzeug (12, 14) zum Verrühren von radioaktiv vorbelasteten abrasiven Stoffen, insbesondere Zement (16), eine Antriebsvorrichtung zum Drehen des wenigstens einen Rührwerkzeuges (12, 14) *sowie Zuführvorrichtungen für Zement, Wasser und radioaktiven Abfall,*
**dadurch gekennzeichnet,**
***dass*** *zumindest ein Teil der Oberfläche des Rührwerkzeugs (12, 14) mit einer Schutzschicht aus einem Polymer aus der Gruppe der Polyaryl, Polyphenylensulfone* oder
- *sulfide überzogen ist und dass die Schutzschicht eine Schichtdicke überwiegend im Bereich von 250µm bis 750µm aufweist*.

3. Rührvorrichtung nach einem der Ansprüche 1 oder 2, **dadurch gekennzeichnet, dass** diese eine nukleare Sicherheitsummantelung umfasst, innerhalb welcher die eigentliche Rührvorrichtung angeordnet ist.

4. *Rührvorrichtung* nach einem der vorherigen Ansprüche, **dadurch gekennzeichnet, dass** die Schutzschicht *des Rührwerkzeuges (12, 14)* mittels elektrostatischer Pulverbeschichtung und nachträglichem Einbrennen erzeugt wurde.

5. *Rührvorrichtung* nach einem der vorherigen Ansprüche, **dadurch gekennzeichnet, dass** *das Rührwerkzeug (12, 14)* im Wesentlichen aus Edelstahl besteht.

6. *Rührvorrichtung* nach einem der vorherigen Ansprüche, **dadurch gekennzeichnet, dass** zwei gegenläufig (12 ⇔ 14) drehbare Einzelrührwerkzeuge benachbart angeordnet sind.

## Claims

1. Stirring device comprising at least one stirrer (12, 14) for the mixing of abrasive materials contaminated by radioactivity, in particular cement (16), a drive device for the rotation of the at least one stirrer (12, 14), and also feed devices for cement, water and radioactive waste,
**characterized**
**in that** at least a portion of the surface of the stirrer (12, 14) has a covering of a protective layer made of PEEK, and in that the thickness of the protective layer is mainly in the region from 500 µm to 750 µm.

2. Stirring device comprising at least one stirrer (12, 14) for the mixing of abrasive materials contaminated by radioactivity, in particular cement (16), a drive device for the rotation of the at least one stirrer (12, 14), and also feed devices for cement, water and radioactive waste,
**characterized**
**in that** at least a portion of the surface of the stirrer (12, 14) has a covering of a protective layer made of a polymer from the group of the polyaryls and polyphenylene sulphones and sulphides, and in that the thickness of the protective layer is mainly in the region from 250 µm to 750 µm.

3. Stirring device according to Claim 1 or 2, **characterized in that** this comprises a nuclear safety casing, arranged within which is the actual stirring device.

4. Stirring device according to any of the preceding claims, **characterized in that** the protective layer of the stirrer (12, 14) was produced by means of electrostatic powder coating and subsequent stoving.

5. Stirring device according to any of the preceding claims, **characterized in that** the stirrer (12, 14) consists essentially of stainless steel.

6. Stirring device according to any of the preceding claims, **characterized in that** two individual stirrers capable of contrarotation (12 ↔ 14) are arranged adjacently.

## Revendications

1. Dispositif de malaxage comprenant au moins un outil de malaxage (12, 14) pour mélanger des matériaux abrasifs chargés radioactivement, en particulier du ciment (16), un dispositif d'entraînement pour faire tourner ledit au moins un outil de malaxage (12, 14), ainsi que des dispositifs de chargement pour le ciment, l'eau et les déchets radioactifs, **caractérisé en ce qu'**au moins une partie de la surface de l'outil de malaxage (12, 14) est revêtue d'une couche de protection en PEEK et **en ce que** la couche de protection présente une épaisseur de couche comprise principalement dans la plage de 500 µm à 750 µm.

2. Dispositif de malaxage comprenant au moins un outil de malaxage (12, 14) pour mélanger des matériaux abrasifs chargés radioactivement, en particulier du ciment (16), un dispositif d'entraînement pour faire tourner ledit au moins un outil de malaxage (12, 14) ainsi que des dispositifs de chargement pour le ciment, l'eau et les déchets radioactifs, **caractérisé en ce qu'**au moins une partie de la surface de l'outil de malaxage (12, 14) est revêtue d'une couche de protection en un polymère du groupe des polyaryles, des sulfones de polyphénylène ou des sulfures de polyphénylène et **en ce que** la couche de protection présente une épaisseur de couche comprise principalement dans la plage de 250 µm à 750 µm.

3. Dispositif de malaxage selon une des revendications 1 ou 2, **caractérisé en ce que** celui-ci comprend une enceinte de sécurité nucléaire, à l'intérieur de laquelle le dispositif de malaxage proprement dit est disposé.

4. Dispositif de malaxage selon l'une quelconque des revendications précédentes, **caractérisé en ce que** la couche de protection de l'outil de malaxage (12, 14) a été produite par revêtement électrostatique de poudre suivi de cuisson.

5. Dispositif de malaxage selon l'une quelconque des revendications précédentes, **caractérisé en ce que** l'outil de malaxage (12, 14) est constitué essentiellement d'acier spécial.

6. Dispositif de malaxage selon l'une quelconque des revendications précédentes, **caractérisé en ce que** deux outils de malaxage individuels tournant en sens contraire (12 <=> 14) sont disposés à proximité l'un de l'autre.
